(19) Europäisches Patentamt
European Patent Office
Office européen des brevets

(11) **EP 4 195 478 A1**

(12) **EUROPEAN PATENT APPLICATION**

(43) Date of publication:
**14.06.2023 Bulletin 2023/24**

(21) Application number: **22211892.9**

(22) Date of filing: **07.12.2022**

(51) International Patent Classification (IPC):
**H02M 1/12** $^{(2006.01)}$    **H02M 7/5387** $^{(2007.01)}$
**H02P 27/06** $^{(2006.01)}$

(52) Cooperative Patent Classification (CPC):
**H02M 7/53876; H02M 1/12; H02P 27/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2021 GB 202117639**

(71) Applicant: **Nissan Motor Manufacturing (UK) Limited**
**Cranfield, Bedfordshire MK43 0DB (GB)**

(72) Inventors:
• **Riedemann, Javier**
  **S1 3JD Sheffield (GB)**
• **Zhu, Zi-Quang**
  **S1 3JD Sheffield (GB)**

(54) **CONTROLLING A VOLTAGE SOURCE INVERTER TO SYNTHESISE A REFERENCE VOLTAGE**

(57) The invention provides a method of controlling a two level, three phase voltage source inverter to synthesise a reference voltage for an electric motor. The inverter includes switches that are operable to provide six active switching states that may be represented as respective active vectors equally spaced about a pole of a polar coordinate plane. A voltage reference vector in the plane defines a reference voltage phase angle. At the start of a switching period, the method comprises: sampling the reference voltage to obtain an initial angle of the reference voltage vector; estimating the reference voltage at the end of the switching period to obtain an estimated final angle of the reference voltage vector in the plane, the estimation being based on the initial angle, the switching period, and a reference voltage fundamental frequency; and, determining a subset of the active vectors based on the initial and final angles. The method includes synthesising the reference voltage during the switching period using the active switching states corresponding to the active vectors in the determined subset.

Figure 5

**Description**

TECHNICAL FIELD

The present invention relates to controlling a voltage source inverter to synthesise a reference voltage, in particular a reference voltage to be provided to an electric motor. Specifically, the present invention determines switching states of the voltage source inverter to be used during a switching period to synthesise the reference voltage, where the determination takes into account the rotation of the reference voltage vector during the switching period.

BACKGROUND

A voltage source inverter (VSI) is a device or converter that converts its voltage from DC (direct current) to AC (alternating current) form. A two-level, three-phase VSI is a commonly used power electronic converter for the control of electrical drives or motors, and includes three pairs of semiconductor switches. Typically, a modulation strategy is used to control the semiconductor switches to perform the voltage conversion from DC to AC.

One known modulation strategy is six-step modulation, which allows for control of the frequency and phase of the output voltage of the VSI. Another known modulation strategy is pulse width modulation (PWM), which allows for control of the magnitude of the output voltage in addition to the frequency and phase.

Conventional PWM is intended for use in a two-level inverter in which a ratio between a switching frequency of the inverter and a fundamental frequency of the reference signal (voltage desired at the inverter output) is above a certain value. This value may typically be regarded as about 15. The switching frequency is the rate at which the DC bus voltage is switched on and off during the PWM process.

Below the certain value of the above ratio, low-order harmonics in the voltage signal will increase, and a problem known as a 'beat phenomenon' may occur. The beat phenomenon is caused by the interaction of signals with different frequencies, which leads to a low-frequency fluctuation. This can produce relatively large torque pulsations, which can increase voltage and current stresses, weaken control performance, and cause additional noise concerns.

To guard against this issue, it is therefore required to choose the switching frequency to be sufficiently high relative to the fundamental frequency so that the ratio between the two is greater than a certain value. However, in certain applications - e.g. electric vehicles, train and ship propulsion, wind power generation, etc. - it is common to use electric machines or motors that have a relatively large number of magnetic poles and/or that operate at relatively high speed, with the aim being to increase the power/torque capability. A large number of poles and/or a high motor speed results in a high operating fundamental frequency of an electric drive.

To keep the ratio above the certain level, the switching frequency therefore needs to be chosen to be higher. However, depending on the power level for conversion and the technology of the semiconductor switches used to build the power inverter, the maximum switching frequency capability of the power devices may be limited. As such, it may not be possible to increase the switching frequency to be high enough to ensure that the ratio is above the certain level. In certain applications, therefore, a VSI may need to be operated with a switching-to-fundamental frequency ratio that is less than the certain value (e.g. less than 15), thereby increasing the risk of the beat phenomenon occurring.

There are some known methods aimed at addressing this issue. In one known method, the reference voltages are modified by averaging them over a switching period of an inverter. However, for low values of the switching-to-fundamental frequency this method can suffer from voltage imbalance and/or a reduction of the output voltage magnitude. In another known method, two of the three phases of the output voltage are modulated during a switching period of an inverter while the remaining phase remains clamped. However, a drawback of this method is that the machine current's quality is reduced. In a further known method, two pulses are added during a switching period of an inverter when the fundamental voltage crosses zero. A drawback of this method is that adding pulses causes the effective switching frequency to increase which, depending on the limitations of the power semiconductors, may be not possible, as mentioned above. In a further known method, a variable sampling time (for sampling the reference voltage) is utilised to attempt to synchronise the sampling period with the output pulses so as to reduce switching time errors. However, this approach is disadvantageous in that it is relatively complex, meaning that its practical implementation can be challenging.

There is therefore still a need for methods or strategies for operating a VSI to synthesise an AC reference voltage, particularly at values of a switching-to-fundamental frequency ratio below a certain level (e.g. below 15).

It is against this background to which the present invention is set.

SUMMARY OF THE INVENTION

According to an aspect of the invention there is provided a method of controlling a voltage source inverter to synthesise a reference voltage to be provided to an electric motor. The voltage source inverter comprises three phase legs each comprising a pair of inverter switches. The inverter switches are operable to provide six active switching states of the inverter. The method comprises defining a polar coordinate plane, representing the six active switching states as respective active vectors equally spaced about a pole of the polar coordinate plane, and representing a voltage reference vector in the polar coordinate plane, the voltage reference vector defining an angle indicative of a phase of the reference voltage.

At the start of a switching period of the voltage source inverter, the method comprises: sampling or measuring the reference voltage to obtain an initial angle of the reference voltage vector in the polar coordinate plane; estimating the reference voltage at the end of the switching period to obtain an estimated final angle of the reference voltage vector in the polar coordinate plane, the estimation being based on the obtained initial angle, the switching period, and a fundamental frequency of the reference voltage; and, determining a subset of the active vectors based on the obtained initial angle and the estimated final angle of the reference voltage vector in the polar coordinate plane.

The method comprises synthesising the reference voltage during the switching period using the active switching states corresponding to the active vectors in the determined subset.

The method may comprise selecting, based on which of the active vectors are in the determined subset, a switching sequence for operating the voltage source inverter, during the switching period, to switch between the active switching states associated with the active vectors in the determined subset.

The selected switching sequence may include switching each inverter switch on/off a maximum of once during the switching period.

The switching sequence may comprise sequentially switching between the active switching states associated with the active vectors in the determined subset according to a direction of rotation of the reference voltage vector about the pole of the polar coordinate plane.

The inverter switches may be operable to provide two zero switching states, one of the zero switching states corresponding to an upper switch in each of the three pairs of inverter switches being switched on, and another one of the zero switching states corresponding to a lower switch in each of the three pairs of inverter switches being switched on. The selected switching sequence may include at least one of the zero switching states.

The selected switching sequence may begin and end with one of the zero switching states.

Six sectors may be defined in the polar coordinate plane, where each sector may be defined by a respective pair of adjacent active vectors in the polar coordinate plane. Determining the subset may comprise determining in which of the sectors the reference voltage vector is expected to be located during the switching period.

The subset may be determined to comprise each of the active vectors defining each of the sectors in which the reference voltage vector is expected to be.

When the reference voltage vector is expected to be in one of the sectors only during the switching period, the subset may comprise the two active vectors defining said one sector. The selected switching sequence may be:

$$VV_0 - VV_1 - VV_2 - VV_0$$

where $VV_0$ is one of the zero switching states, $VV_1$ is the active switching state corresponding to the active vector behind the reference voltage vector in the one sector, and $VV_2$ is the active switching state corresponding to the active vector ahead of the reference voltage vector in the one sector.

The method may comprise implementing the selected switching sequence with duty cycles given by:

$$d_0 = 1 - d_1 - d_2$$

$$d_1 = \frac{2}{\sqrt{3}} m \sin\left(\frac{\pi}{3} - \theta_{ref,i}\right)$$

$$d_2 = \frac{2}{\sqrt{3}} m \sin\left(\theta_{ref,i}\right)$$

where $d_0$ is a duty cycle of the zero switching state, $d_1$ is a duty cycle of the active switching state corresponding to the active vector behind the reference voltage vector in the one sector, $d_2$ is a duty cycle of the active switching state corresponding to the active vector ahead of the reference voltage vector in the one sector, $0 \leq m \leq \sqrt{3}/2$ is a modulation index, and $\theta_{ref,i}$ is the angle of a virtual reference vector in the one sector given by:

$$\theta_{ref,i} = \theta_{ref} + \frac{\omega_1 T_s}{2}$$

where $0 \leq \theta_{ref} < {}^{\pi}/_3$ is the initial angle of the voltage reference vector in the one sector, $\omega_1$ is an electric rotational speed of the electric motor, and $T_s$ is the switching period.

When the reference voltage vector is expected to be in two of the sectors only during the switching period, the subset may comprise the three active vectors defining said two sectors. The selected switching sequence may be: $VV_0$ - $VV_1$ - $VV_2$ - $VV_3$ - $VV_0$ where $VV_0$ is one of the zero switching states, $VV_1$ is the active switching state corresponding to the active vector behind the reference voltage vector at the initial angle of the reference voltage vector, $VV_2$ is the active switching state corresponding to the active vector ahead of the reference voltage vector at the initial angle of the reference voltage vector, and $VV_3$ is the active switching state corresponding to the active vector ahead of the reference voltage vector at the final angle of the reference voltage vector.

The method may comprise implementing the selected switching sequence with duty cycles given by:

$$d_0 = 1 - d_1 - d_2 - d_3$$

$$d_1 = d_{1,i}$$

$$d_2 = d_{2,i} + d_{1,f}$$

$$d_3 = d_{2,f}$$

$$d_{1,i} = \frac{2}{\sqrt{3}} k_i m \sin\left({}^{\pi}/_3 - \theta_{ref,i}\right)$$

$$d_{2,i} = \frac{2}{\sqrt{3}} k_i m \sin\left(\theta_{ref,i}\right)$$

$$d_{1,f} = \frac{2}{\sqrt{3}} k_f m \sin\left({}^{\pi}/_3 - \theta_{ref,f}\right)$$

$$d_{2,f} = \frac{2}{\sqrt{3}} k_f m \sin\left(\theta_{ref,f}\right)$$

$$k_i = \frac{\pi/3 - \theta_{ref}}{\omega_1 T_s}$$

$$k_f = 1 - k_i$$

where $d_0$ is a duty cycle of the zero switching state, $d_1$ is a duty cycle of the active switching state corresponding to the active vector behind the reference voltage vector at the initial angle, $d_2$ is a duty cycle of the active switching state corresponding to the active vector ahead of the reference voltage vector at the initial angle of the reference voltage vector, $d_3$ is a duty cycle of the active switching state corresponding to the active vector ahead of the reference voltage vector at the final angle of the reference voltage vector, $0 \leq m \leq \sqrt{3}/2$ is a modulation index, $\omega_1$ is a rotational speed of the electric motor, $T_s$ is the switching period, and $\theta_{ref,i}$, $\theta_{ref,f}$ are the angles of virtual reference vectors in the initial and final sectors of the reference voltage vector given by:

$$\theta_{ref,i} = \frac{\pi/3 + \theta_{ref}}{2}$$

$$\theta_{ref,f} = \frac{\omega_1 T_s - (\pi/3 - \theta_{ref})}{2}$$

where $0 \leq \theta_{ref} < \pi/3$ is the initial angle of the voltage reference vector in the sector in which the voltage reference vector is located. The factors $k_i$ and $k_f$ are used to obtain duty cycles proportional to the angle covered in the initial and final sector of the reference voltage, respectively.

When the reference voltage vector is expected to be in three of the sectors only during the switching period, the subset may comprise the four active vectors defining said three sectors. The selected switching sequence may be: $VV_0$ - $VV_1$ - $VV_2$ - $VV_3$ - $VV_4$ - $VV_0$ where $VV_0$ is one of the zero switching states, $VV_1$ is the active switching state corresponding to the active vector behind the reference voltage vector at the initial angle of the reference voltage vector, $VV_2$ is the active switching state corresponding to the active vector ahead of the reference voltage vector at the initial angle of the reference voltage vector, $VV_3$ is the active switching state corresponding to the active vector behind the reference voltage vector at the final angle of the reference voltage vector, and $VV_4$ is the active switching state corresponding to the active vector ahead of the reference voltage vector at the final angle of the reference voltage vector.

The method may comprise implementing the selected switching sequence with duty cycles given by:

$$d_0 = 1 - d_1 - d_2 - d_3 - d_4$$

$$d_1 = d_{1,i}$$

$$d_2 = d_{2,i} + d_{1,m}$$

$$d_3 = d_{2,m} + d_{1,f}$$

$$d_4 = d_{2,f}$$

$$d_{1,i} = \frac{2}{\sqrt{3}} k_i m \sin(\pi/3 - \theta_{ref,i})$$

$$d_{2,i} = \frac{2}{\sqrt{3}} k_i m \sin(\theta_{ref,i})$$

$$d_{1,m} = d_{2,m} = \frac{1}{\sqrt{3}} k_m m$$

$$d_{1,f} = \frac{2}{\sqrt{3}} k_f m \sin(\pi/3 - \theta_{ref,f})$$

$$d_{2,f} = \frac{2}{\sqrt{3}} k_f m \sin(\theta_{ref,f})$$

$$k_i = \frac{\pi/3 - \theta_{ref}}{\omega_1 T_s}$$

$$k_m = \frac{\pi/3}{\omega_1 T_s}$$

$$k_f = 1 - k_i - k_m$$

where $d_0$ is a duty cycle of the zero switching state, $d_1$ is a duty cycle of the active switching state corresponding to the active vector behind the reference voltage vector at the initial angle, $d_2$ is a duty cycle of the active switching state corresponding to the active vector ahead of the reference voltage vector at the initial angle of the reference voltage vector, $d_3$ is a duty cycle of the active switching state corresponding to the active vector behind the reference voltage vector at the final angle of the reference voltage vector, $d_4$ is a duty cycle of the active switching state corresponding to the active vector ahead of the reference voltage vector at the final angle of the reference voltage vector, $0 \leq m \leq \sqrt{3}/2$ is a modulation index, $\omega_1$ is a rotational speed of the electric motor, $T_s$ is the switching period, and $\theta_{ref,i}, \theta_{ref,m}, \theta_{ref,f}$ are virtual reference vectors in the initial, middle and final sectors of the reference voltage vector given by:

$$\theta_{ref,i} = \frac{\pi/3 + \theta_{ref}}{2}$$

$$\theta_{ref,m} = \frac{\pi}{6}$$

$$\theta_{ref,f} = \frac{\omega_1 T_s - \pi/3 - (\pi/3 - \theta_{ref})}{2}$$

where $0 \leq \theta_{ref} < \pi/3$ is the initial angle of the voltage reference vector in the sector in which the voltage reference vector is located. The factors $k_i$, $k_m$ and $k_f$ are used to obtain duty cycles proportional to the angle covered in the initial, middle and final sector of the reference voltage, respectively.

The method may comprise repeating the steps of sampling the reference voltage, estimating the reference voltage, determining the subset, and synthesising the reference voltage, for successive switching periods.

One rotation of the reference voltage vector about the pole of the polar coordinate plane may correspond to the fundamental frequency of the reference voltage. The method may be performed if a ratio between a switching frequency of the voltage source inverter and the fundamental frequency is below a prescribed threshold value.

According to another aspect of the present invention there is provided a controller for controlling a voltage source inverter to perform a method according as described above.

According to another aspect of the present invention there is provided a non-transitory, computer-readable storage medium storing instructions thereon that when accessed by one or more processors cause the one or more processors to perform a method as described above.

BRIEF DESCRIPTION OF THE DRAWINGS

Examples of the invention will now be described with reference to the accompanying drawings, in which:

Figure 1 schematically illustrates a voltage source inverter and a controller for controlling the voltage source inverter in accordance with an example of the invention;

Figure 2 illustrates a polar coordinate plane with six active vectors, equally spaced about a pole of the plane, representing active switching states of the voltage source inverter of Figure 1, and representing a voltage reference vector indicative of a reference voltage of the voltage source inverter of Figure 1.

Figures 3(a) and 3(b) illustrate different examples of how the voltage reference vector of Figure 2 rotates about the pole of the plane over a switching period of the voltage source inverter of Figure 1;

Figures 4(a) and 4(b) illustrate different examples of parameters in the polar coordinate plane of Figure 2 that are used to determine duty cycles of the active switching states of the voltage source inverter of Figure 1 over a switching period;

Figure 5 illustrates steps of a method performed by the controller of Figure 1 in accordance with an example of the invention;

Figure 6 schematically illustrates a control scheme for performing a simulation in accordance with the method of Figure 5;

Figures 7 to 11 show plots illustrating results of the simulation of Figure 6;

Figures 12 and 13 show plots illustrating results of an experiment performed in accordance with the method of Figure 5; and,

Figures 14 to 18 show plots illustrating results of a further simulation performed in accordance with the method of Figure 5.

## DETAILED DESCRIPTION

The present invention relates to modulation techniques, strategies, or methods for power electronics circuits. Modulation strategies are strategies for controlling the state of the switches in these circuits. Modern power semiconductors generally can be switched on and off tens of thousands of times per second on command.

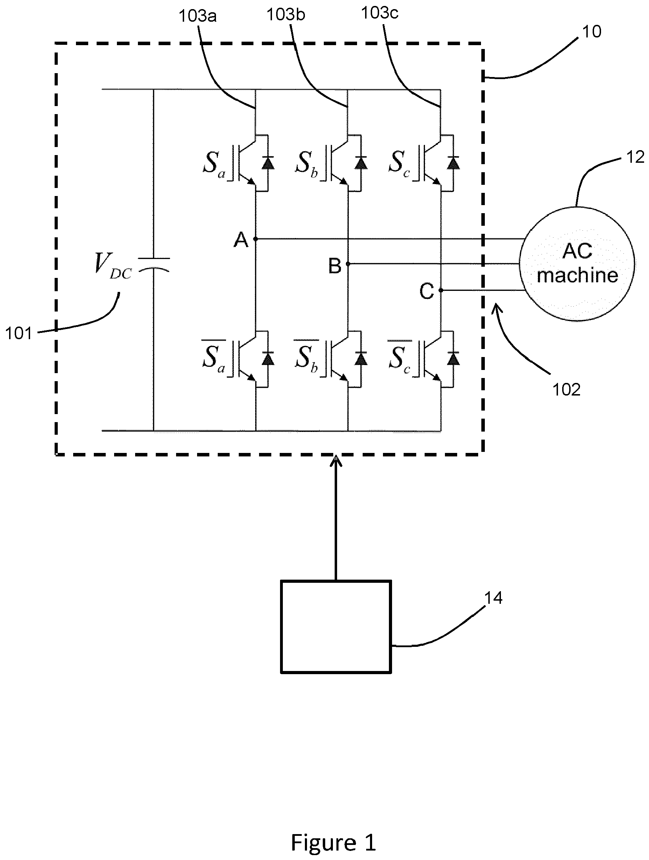

Figure 1 illustrates an example of a two-level, three-phase voltage source inverter (VSI) 10. The VSI 10 is for converting its voltage from a DC (direct current) supply 101 to AC (alternating current) at its output 102. In particular, the VSI 10 synthesises a reference voltage to be provided to an AC machine (electric motor or drive) 12. The VSI 10 includes three pairs of switches $(S_a, \overline{S_a})$, $(S_b, \overline{S_b})$, $(S_c, \overline{S_c})$ arranged in parallel. Each pair of switches arranged between the positive DC bus and negative DC bus represents a phase leg 103a, 103b, 103c. The output terminal A, B, C is the midpoint of the two switches in each pair. Only one switch of a phase leg 103a, 103b, 103c may be turned on at any given time to prevent a short circuit between the DC buses.

One state (ON) of each phase leg 103a, 103b, 103c is the case in which the upper switch $S_a$, $S_b$, $S_c$ is turned on, and the other state (OFF) is the case in which the lower switch $\overline{S_a}$, $\overline{S_b}$, $\overline{S_c}$ is turned on. The VSI 10 therefore has $2^3=8$ possible switching states. Six of these states are active states, whereas the two states in which either all of the upper switches or all of the lower switches are turned on are referred to as zero states. The line-to-line output voltage is zero in the zero states.

Figure 1 also shows a controller 14 for controlling the operation of the VSI 10 - in particular, the states of the switches - in accordance with one or more modulation strategies for synthesising a desired voltage to be output to the AC machine 12. The controller 14 may be in the form of any suitable computing device, for instance one or more functional units or modules implemented on one or more computer processors. Such functional units may be provided by suitable software running on any suitable computing substrate using conventional or customer processors and memory. The one or more functional units may use a common computing substrate (for example, they may run on the same server) or separate substrates, or one or both may themselves be distributed between multiple computing devices. A computer memory may store instructions for performing the methods to be performed by the controller, and the processor(s) may execute the stored instructions to perform the methods.

One known modulation strategy for controlling an inverter such as the VSI 10 is so-called 'six-step modulation', which allows for control of the frequency and phase of the output voltage of the VSI. Six-step modulation uses a sequence of six switching patterns or states for the three phase legs of the VSI to generate a full cycle of three phase voltages.

Space Vector Modulation (SVM) is another known modulation strategy for modulating three-phase inverters such as the VSI 10. SVM involves synthesising a reference voltage by switching between the active and zero switching states, and can control the magnitude of the output voltage in addition to the frequency and phase.

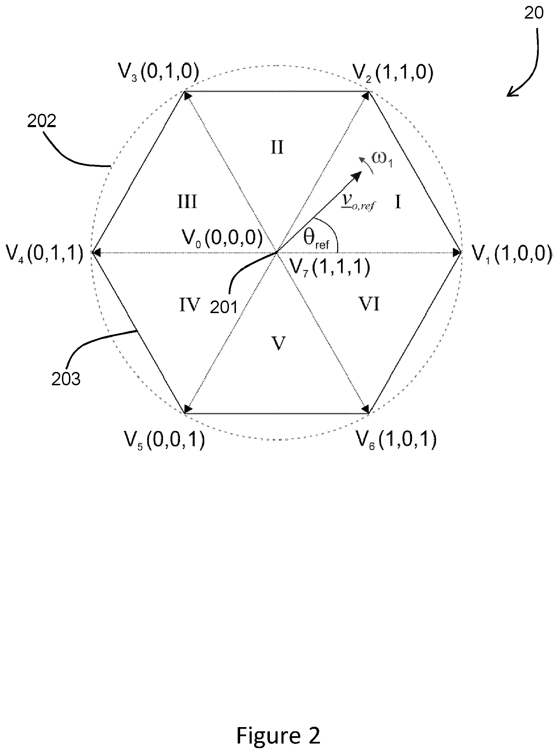

Figure 2 shows how the six active switching states may be illustrated or represented on a polar coordinate plane 20 as six (active) vectors $V_1$-$V_6$. The active vectors are equally spaced about a pole 201 of the plane 20, i.e. they are equally spaced in a circle 202 with 60 degrees phase shift between respective pairs of the active vectors. The active vectors are a representation of the possible ON/OFF combinations of the pairs of inverter switches $(S_a, \overline{S_a})$, $(S_b, \overline{S_b})$,

($S_c$, $\overline{S_c}$), with 1 representing ON and 0 representing OFF. The zero switching states are also represented on the plane 20, in particular as the zero vectors $V_0$ and $V_7$ at the pole 201. This is summarised in Table 1 below.

In SVM, a reference voltage vector $\underline{v}_{o,ref}$ is synthesised by switching between active and zero vectors, where $\underline{v}_{o,ref}$ is the desired voltage at the inverter output 102. The duty cycle of a switch is controlled such that a load sees a controllable average voltage. To achieve this, the switching frequency (i.e. repetition frequency for the SVM signal) is chosen to be sufficiently high such that the load cannot follow the individual switching events. In SVM, the switching frequency $f_s$ is considered to be high enough relative to the required output fundamental frequency to assume (with sufficiently low error) that the reference voltage is static during a switching period $T_s = 1/f_s$. Note that one rotation of the reference voltage vector $\underline{v}_{o,ref}$ about the pole 201 of the polar coordinate plane 20 corresponds to a fundamental frequency of the reference voltage.

Table 1

|  | **Voltage vector** $V_i = [S_a\ S_b\ S_c]$ | |
|---|---|---|
| **Active vectors** | $V_1 = [1\ 0\ 0]$ | $V_4 = [0\ 1\ 1]$ |
|  | $V_2 = [1\ 1\ 0]$ | $V_5 = [0\ 0\ 1]$ |
|  | $V_3 = [0\ 1\ 0]$ | $V_6 = [1\ 0\ 1]$ |
| **Zero vectors** | $V_0 = [0\ 0\ 0]$ | $V_7 = [1\ 1\ 1]$ |

The six active vectors $V_1$-$V_6$ define six sectors I - VI therebetween, the six sectors forming a hexagon 203. In SVM, to synthesise the reference voltage vector $\underline{v}_{o,ref}$ in a particular sector, a switching sequence using the two active vectors that define the particular sector, as well as one of the zero vectors, is deployed. For instance, to synthesise the reference voltage vector $\underline{v}_{o,ref}$ in sector I, the two active vectors $V_1$ and $V_2$ and the zero vector $V_0$ would be used in a switching pattern.

The duty cycles for the two active vectors ($d_1$ and $d_2$) and the zero vector ($d_0$) are calculated according to:

$$d_1 = \frac{2}{\sqrt{3}} m \sin\left(\frac{\pi}{3} - \theta_{ref}\right)$$

$$d_2 = \frac{2}{\sqrt{3}} m \sin\left(\theta_{ref}\right)$$

$$d_0 = 1 - d_1 - d_2$$

where $m$ is a modulation index ( $0 \leq m \leq \sqrt{3}/2$ ) and $\theta_{ref}$ is the angle of the voltage reference vector $\underline{v}_{o,ref}$ related to a sector of the hexagon 203 ($0 \leq \theta_{ref} < \pi/3$).

Six-step modulation may be regarded as a particular case of SVM in which the reference voltage vector has a magnitude equal to the magnitude of the active vectors and therefore rotates along the circle 202. In six-step modulation, only the active vectors are used for the modulation, and they are applied sequentially from $V_1$ to $V_6$ according to the angular position of the reference voltage vector $\underline{v}_{o,ref}$, with the aim being to apply the active vector that is closest to the reference voltage vector $\underline{v}_{o,ref}$.

As mentioned above, when the ratio $m_f = f_s/f_1$ between the switching frequency $f_s$ and the fundamental frequency $f_1$ is sufficiently large, it can be assumed that when the reference voltage is sampled, it has a constant value during a switching period $T_s = 1/f_s$ of the inverter. In that case, the output pulses are assumed to accurately reflect the components of the instantaneous voltage reference vector $v_{o,ref}$. However, as the ratio $m_f$ becomes smaller, it no longer holds that the reference voltage is constant within a switching period. In particular, with reference to Figure 2, an angle $\Delta\theta = \omega_1 T_s$ is described by the reference vector $v_{o,ref}$ in a given $T_s$, where $\omega_1 = 2\pi f_1$ is the fundamental frequency (in rad/s) of the required output voltage.

Use of conventional SVM when the ratio $m_f$ is below a certain value can result in there being a significant error between the reference voltage vector being synthesised by the output pulses, and the voltage that is actually required by the AC machine 12. This error will result in a decreased modulation precision and an increment in low-order output harmonics, which could lead to the beat phenomenon described above.

The present invention is advantageous in that it provides a method of controlling a voltage source inverter to synthesise a reference voltage to be provided to an electric motor, that takes into account the rotation of the voltage reference vector during a switching period of the inverter. As such, the method provided by the invention is particularly suitable for use for lower values of a ratio between the switching frequency of the inverter and the fundamental frequency, in particular when the ratio is below a certain level, e.g. below 15. The invention therefore beneficially prevents occurrences of the beat phenomenon described above.

The present invention achieves these benefits by providing a method that, unlike in conventional SVM outlined above, can use more than two active vectors in a given modulation interval or switching period $T_s$ to synthesise parts of a voltage waveform. In particular, the method takes into consideration in which sector of the hexagon 203 the reference voltage vector $\underline{v}_{o,ref}$ is located at the start and end of a switching period, and selects which active vectors are to be used to synthesise the desired output voltage during the switching period on this basis. In the described method, two, three or four active vectors may be used during a switching period.

More specifically, the aim of the inventive method is to use each of the active vectors associated with the sectors where the reference voltage vector $\underline{v}_{o,ref}$ is expected to be during a switching period $T_s$. In this way, the conventional SVM is improved as the present method considers the rotation of the reference voltage within a switching period. It is noted that in a fundamental cycle (i.e. one complete rotation of the reference voltage vector $\underline{v}_{o,ref}$ about the pole 201), not necessarily the same number of active vectors will be used in each switching period, but a combination of two- and three-vector modulation, or three- and four-vector modulation could occur, for instance (where two-, three- and four-vector modulation use two, three and four active vectors, respectively, in a switching period).

The invention benefits from being relatively simple to implement. A higher output voltage may also be achievable (without using overmodulation) compared to approaches based on sinusoidal pulse width modulation. Furthermore, lower current harmonic distortion is experienced relative to a six-step modulation approach.

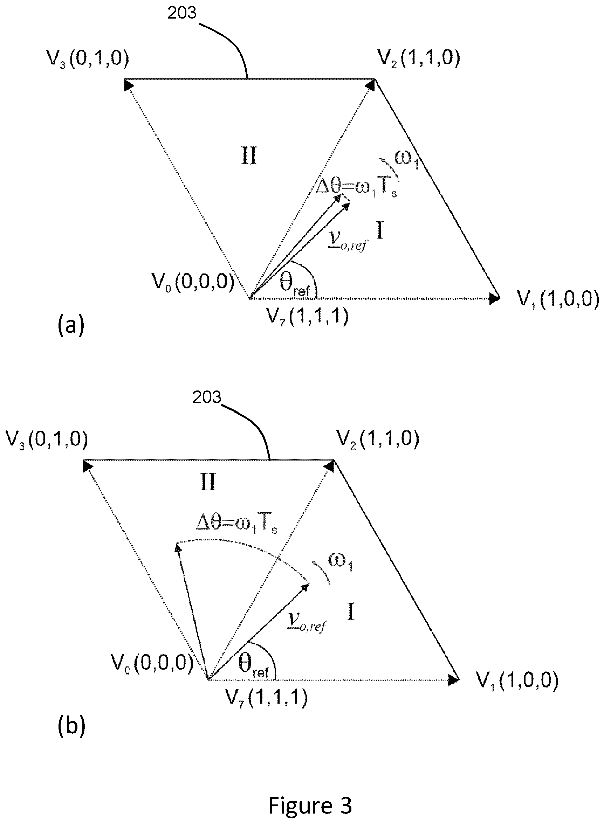

Figures 3(a) and 3(b) schematically illustrate cases in which two- and three-vector modulation, respectively, are used in accordance with the present method. In particular, in the example illustrated in Figure 3(a), when the output voltage of the VSI 10 is sampled or measured at the start of a switching period the reference voltage vector $\underline{v}_{o,ref}$ is located in sector I of the hexagon 203 on the polar plane 20. Also at the start of the switching period, it is estimated where the reference voltage vector $\underline{v}_{o,ref}$ will be at the end of the switching period. In particular, the angle $\Delta\theta = \omega_1 T_s$ through which the reference voltage vector $\underline{v}_{o,ref}$ rotates during the switching period is estimated, where $\omega_1 = 2\pi f_1$ is the fundamental frequency of the reference voltage, i.e. the fundamental frequency of the desired/required voltage that is output to the electric motor 12. The fundamental frequency may depend on a number of poles or a rotational speed of the electric motor. As illustrated in Figure 3(a), the reference voltage vector $\underline{v}_{o,ref}$ is estimated to still be in sector I at the end of the switching period. As such, a two-vector modulation strategy is selected for use to synthesise the reference voltage during the switching period. In the particular example illustrated in Figure 3(a), as $v_{o,ref}$ is in sector I for the entirety of the switching period, then the active vectors associated with that sector, namely $V_1$ and $V_2$, and one of the zero vectors $V_0$ and $V_7$, are used to synthesise the reference voltage.

In the example illustrated in Figure 3(b), like in Figure 3(a) when the output voltage of the VSI 10 is sampled at the start of a switching period the reference voltage vector $\underline{v}_{o,ref}$ is located in sector I of the hexagon 203. However, unlike in Figure 3(a), the reference voltage vector $\underline{v}_{o,ref}$ is estimated to be in sector II at the end of the switching period. As such, a three-vector modulation strategy is selected for use to synthesise the reference voltage during the switching period. In this particular example, the active vectors associated with sectors I and II, namely $V_1$, $V_2$ and $V_3$, and one of the zero vectors $V_0$ and $V_7$, are used to synthesise the reference voltage during the switching period.

Although not illustrated in Figure 3, a similar approach is taken to select a four-vector modulation strategy if the reference voltage vector $\underline{v}_{o,ref}$ is estimated or expected to be in three different sectors during a switching period. For instance, if the sampled reference voltage at the start of the switching period is in sector I and it is estimated that the reference voltage will be in sector III at the end of the switching period, then the active vectors associated with sectors I, II and III, namely $V_1$, $V_2$, $V_3$ and $V_4$, and one of the zero vectors $V_0$ and $V_7$, are used to synthesise the reference voltage.

Different switching sequences for controlling the VSI 10 during a switching period are provided. The particular switching sequence that is selected for implementation during a switching period depends on the sector of the hexagon 203 in which the reference voltage vector $\underline{v}_{o,ref}$ is located at the start and the end of the switching period, i.e. the initial and final sectors.

Table 2 illustrates an example of a switching sequence that may be applied when two-vector modulation is needed in the present method. Note that the abbreviation VV refers to a generic voltage vector and is not equivalent to the hexagon vectors $V_1$-$V_6$ referred to above (and labelled in Figure 2). The sequence applied is not the typical sequence used in a conventional SVM. Moreover, it may be seen that the active vector located behind the reference vector is always applied first after the zero vector (where 'behind' refers to the anticlockwise direction of rotation of the reference vector about the pole 201). For instance, when the reference vector is in sector I then $V_1$ is the active vector behind the reference vector.

Table 2

| Sector | Voltage vector sequence $VV_0$ - $VV_1$ - $VV_2$ - $VV_0$ |
|---|---|
| I | 000-100-110-000 |
| II | 000-110-010-000 |
| III | 000-010-011-000 |
| IV | 000-011-001-000 |
| V | 000-001-101-000 |
| VI | 000-101-100-000 |

In a corresponding manner, Tables 3 and 4 illustrate examples of switching sequence that may be applied when three-vector modulation and four-vector modulation, respectively, is needed in the present method. Again, the active vector located behind the reference vector is applied first in the sequence after the zero vector.

Table 3

| Initial sector | Final sector | Voltage vector sequence $VV_0$ - $VV_1$ - $VV_2$ - $VV_3$ - $VV_0$ |
|---|---|---|
| I | II | 000-100-110-010-000 |
| II | III | 000-110-010-011-000 |
| III | IV | 000-010-011-001-000 |
| IV | V | 000-011-001-101-000 |
| V | VI | 000-001-101-100-000 |
| VI | I | 000-101-100-110-000 |

Table 4

| Initial sector | Final sector | Voltage vector sequence $VV_0$ - $VV_1$ - $VV_2$ - $VV_3$ - $VV_4$ - $VV_0$ |
|---|---|---|
| I | III | 000-100-110-010-011-000 |
| II | IV | 000-110-010-011-001-000 |
| III | V | 000-010-011-001-101-000 |
| IV | VI | 000-011-001-101-100-000 |
| V | I | 000-001-101-100-110-000 |
| VI | II | 000-101-100-110-010-000 |

In general, at low values of the ratio $m_f$ it may be convenient to apply the active vectors sequentially with reference to the direction of rotation of the reference vector (as shown in Tables 2, 3 and 4). It is noted that a sequence based on symmetry around the centre of the switching period is possible only in the case of modulation with two active vectors. When using three-vector modulation it is not possible to apply a symmetrical sequence if a maximum of one turn on/off is expected per switch during a switching period. A combination of two- and three-vector modulation, or three- and four-vector modulation, could be used in a fundamental cycle. For simplicity, and with the aim to improve the quality of the currents in terms of symmetrical positive and negative half-cycles, in the described example similar switching sequences are proposed for each modulation period (independent of the number of active vectors used). That is, each switching sequence starts and ends with a zero-vector, and the active vectors are applied consecutively relative to the direction of rotation of the reference vector in the polar coordinate plane.

The duty cycles of the different voltage vectors that will be used during a given switching period in the described example are outlined in the following. The duty cycles refer to the amount of time the active and zero vectors are switched on during a sampling (pulse) period.

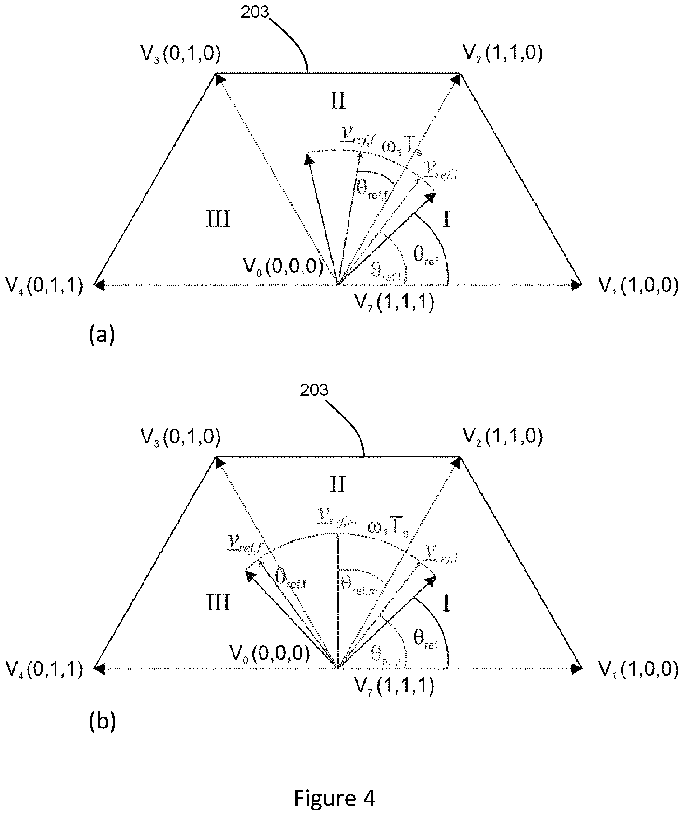

With reference to Figure 4, 'virtual' reference vectors are defined in the middle angle of each sector where the 'actual' reference vector is expected to be. In particular, Figure 4(a) illustrates a case in which three-vector modulation is used, and so two virtual reference vectors are defined, one in each of the two sectors in which the reference voltage vector is located during the switching period. Specifically, an initial virtual voltage vector $\underline{v_{ref,i}}$ is defined in the sector in which the reference voltage vector $\underline{v_{o,ref}}$ is located at the start of a switching period (i.e. sector I in the example illustrated in Figure 4(a)), and a final voltage vector $\underline{v_{ref,f}}$ is defined in the sector in which the reference voltage vector $\underline{v_{o,ref}}$ is expected to be located at the end of the switching period (i.e. sector II in the example illustrated in Figure 4(a)).

Similarly, Figure 4(b) illustrates a case in which four-vector modulation is used, and so three virtual reference vectors are defined, one in each of the three sectors in which the reference voltage vector is located during the switching period. Specifically, an initial virtual voltage vector $\underline{v_{ref,i}}$ is defined in the sector in which the reference voltage vector $\underline{v_{o,ref}}$ is located at the start of a switching period (i.e. sector I in the example illustrated in Figure 4(b)), a middle virtual voltage vector $\underline{v_{ref,m}}$ is defined in the middle of the three sectors in which the reference voltage vector $\underline{v_{o,ref}}$ is expected to be located during the switching period (i.e. sector II in the example illustrated in Figure 4(b)), and a final virtual voltage vector $\underline{v_{ref,f}}$ is defined in the sector in which the reference voltage vector $\underline{v_{o,ref}}$ is expected to be located at the end of the switching period (i.e. sector III in the example illustrated in Figure 4(b)).

As is apparent from the above, the subscripts $i$, $m$ and $f$ refer to the initial, middle, and final sectors, respectively, in which the reference voltage vector $\underline{v_{o,ref}}$ is expected to be during the switching period.

In the case of two-vector modulation, the reference vector is phase-shifted by a leading angle of half the one described in a switching period $T_s$, i.e. by the angle $\Delta\theta/2$.

In the following, $\theta_{ref}$ is the angle of the voltage reference vector $\underline{v_{o,ref}}$ related to a certain sector of the hexagon 203. As such, $\theta_{ref}$ is in the range $0 \leq \theta_{ref} < \pi/3$.

For two-vector modulation (i.e. the reference vector is in only one sector during the switching period), the switching sequence outlined in Table 2 above may be implemented with duty cycles given by:

$$d_0 = 1 - d_1 - d_2$$

$$d_1 = \frac{2}{\sqrt{3}} m \sin\left(\pi/3 - \theta_{ref,i}\right)$$

$$d_2 = \frac{2}{\sqrt{3}} m \sin\left(\theta_{ref,i}\right)$$

where $d_0$ is a duty cycle of the zero switching state, $d_1$ is a duty cycle of the active switching state corresponding to the active vector behind the reference voltage vector in the sector, and $d_2$ is a duty cycle of the active switching state corresponding to the active vector ahead of the reference voltage vector in the sector, $0 \leq m \leq \sqrt{3}/2$ is a modulation index. Also, $\theta_{ref,i}$ may be given by:

$$\theta_{ref,i} = \theta_{ref} + \frac{\omega_1 T_s}{2}$$

where $\omega_1$ is an electric rotational speed of the electric motor, and $T_s$ is the switching period.

For three-vector modulation (i.e. the reference vector is in only two sectors during the switching period), the switching sequence outlined in Table 3 above may be implemented with duty cycles given by:

$$d_0 = 1 - d_1 - d_2 - d_3$$

$$d_1 = d_{1,i}$$

$$d_2 = d_{2,i} + d_{1,f}$$

$$d_3 = d_{2,f}$$

$$d_{1,i} = \frac{2}{\sqrt{3}} k_i m \sin\left(\pi/3 - \theta_{ref,i}\right)$$

$$d_{2,i} = \frac{2}{\sqrt{3}} k_i m \sin\left(\theta_{ref,i}\right)$$

$$d_{1,f} = \frac{2}{\sqrt{3}} k_f m \sin\left(\pi/3 - \theta_{ref,f}\right)$$

$$d_{2,f} = \frac{2}{\sqrt{3}} k_f m \sin\left(\theta_{ref,f}\right)$$

$$k_i = \frac{\pi/3 - \theta_{ref}}{\omega_1 T_s}$$

$$k_f = 1 - k_i$$

where $d_0$ is a duty cycle of the zero switching state, $d_1$ is a duty cycle of the active switching state corresponding to the active vector behind the reference voltage vector at the initial angle of the reference voltage vector, $d_2$ is a duty cycle of the active switching state corresponding to the active vector ahead of the reference voltage vector at the initial angle of the reference voltage vector, $d_3$ is a duty cycle of the active switching state corresponding to the active vector ahead of the reference voltage vector at the final angle of the reference voltage vector, $0 \leq m \leq \sqrt{3}/2$ is a modulation index, $\omega_1$ is an electric rotational speed of the electric motor, and $T_s$ is the switching period. The virtual reference vector angles $\theta_{ref,i}$, $\theta_{ref,f}$ in the initial and final sectors of the reference voltage vector are given by:

$$\theta_{ref,i} = \frac{\pi/3 + \theta_{ref}}{2}$$

$$\theta_{ref,f} = \frac{\omega_1 T_s - \left(\pi/3 - \theta_{ref}\right)}{2}$$

For four-vector modulation (i.e. the reference vector is in only three sectors during the switching period), the switching sequence outlined in Table 4 above may be implemented with duty cycles given by:

$$d_0 = 1 - d_1 - d_2 - d_3 - d_4$$

$$d_1 = d_{1,i}$$

$$d_2 = d_{2,i} + d_{1,m}$$

$$d_3 = d_{2,m} + d_{1,f}$$

$$d_4 = d_{2,f}$$

$$d_{1,i} = \frac{2}{\sqrt{3}} k_i m \sin\left(\frac{\pi}{3} - \theta_{ref,i}\right)$$

$$d_{2,i} = \frac{2}{\sqrt{3}} k_i m \sin\left(\theta_{ref,i}\right)$$

$$d_{1,m} = d_{2,m} = \frac{1}{\sqrt{3}} k_m m$$

$$d_{1,f} = \frac{2}{\sqrt{3}} k_f m \sin\left(\frac{\pi}{3} - \theta_{ref,f}\right)$$

$$d_{2,f} = \frac{2}{\sqrt{3}} k_f m \sin\left(\theta_{ref,f}\right)$$

$$k_i = \frac{\pi/3 - \theta_{ref}}{\omega_1 T_s}$$

$$k_m = \frac{\pi/3}{\omega_1 T_s}$$

$$k_f = 1 - k_i - k_m$$

where $d_0$ is a duty cycle of the zero switching state, $d_1$ is a duty cycle of the active switching state corresponding to the active vector behind the reference voltage vector at the initial angle of the reference voltage vector, $d_2$ is a duty cycle of the active switching state corresponding to the active vector ahead of the reference voltage vector at the initial angle of the reference voltage vector, $d_3$ is a duty cycle of the active switching state corresponding to the active vector behind the reference voltage vector at the final angle of the reference voltage vector, $d_4$ is a duty cycle of the active switching state corresponding to the active vector ahead of the reference voltage vector at the final angle of the reference voltage vector, $0 \leq m \leq \sqrt{3}/2$ is a modulation index, $\omega_1$ is a rotational speed of the electric motor, and $T_s$ is the switching period. The virtual reference vector $\theta_{ref,i}$, $\theta_{ref,m}$, $\theta_{ref,f}$ in the initial, middle, and final sectors are given by:

$$\theta_{ref,i} = \frac{\pi/3 + \theta_{ref}}{2}$$

$$\theta_{ref,m} = \frac{\pi}{6}$$

$$\theta_{ref,f} = \frac{\omega_1 T_s - \pi/3 - (\pi/3 - \theta_{ref})}{2}$$

To implement the described method, the duty cycles may be calculated as above and then loaded into so-called 'compare registers' in the controller 14 (which may be or comprise a microcontroller or a digital signal processor) to generate the output switching pulses for the VSI 10.

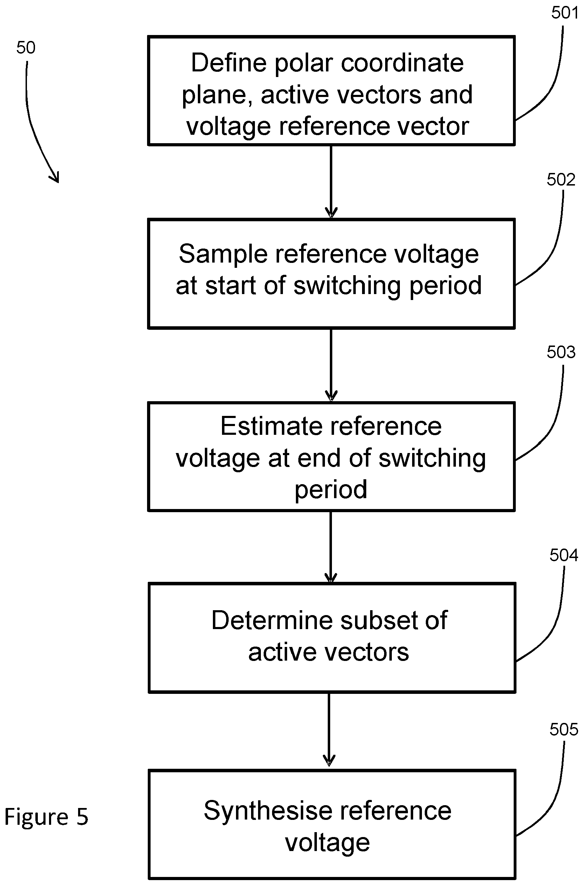

Figure 5 summarises the steps of a method 50 performed by the controller 14 in accordance with the present invention. The method is for controlling a voltage source inverter (VSI) to synthesise a reference voltage to be provided to an electric motor. The VSI includes three phase legs each having a pair of inverter switches. The inverter switches are operable to provide six active switching states of the inverter.

At step 501 of the method 50, a polar coordinate plane, representing the six active switching states as respective active vectors equally spaced about a pole of the polar coordinate plane, is defined. A voltage reference vector is also represented in the polar coordinate plane, where the voltage reference vector defines an angle indicative of a phase of the reference voltage.

The method 50 then involves performing a number of steps at the start of a switching period, namely, steps 502, 503 and 504. At step 502, the reference voltage is sampled or measured to obtain an initial angle of the reference voltage vector in the polar coordinate plane.

At step 503, it is estimated what the reference voltage will be at the end of the switching period to obtain an estimated final angle of the reference voltage vector in the polar coordinate plane. The estimation is based on the initial angle obtained at step 502, the length of the switching period, and a fundamental frequency of the reference voltage. The switching period $T_s$ is given by $T_s = 1/f_s$, where $f_s$ is the switching frequency. The final angle may be estimated by adding $\Delta\theta = \omega_1 T_s$ to the sampled initial angle, where $\omega_1 = 2\pi f_1$, $f_1$ being the fundamental frequency (in Hertz) and $\omega_1$ being the fundamental frequency in rad/s of the required output voltage.

At step 504, a subset of the six active vectors is determined based on the obtained initial angle and the estimated final angle of the reference voltage vector in the polar coordinate plane. The six active vectors may define six sectors in the polar coordinate plane. The subset may be determined to include those active vectors associated with the sectors of the polar plane in which the reference voltage vector is estimated to be located during the switching period.

At step 505, the method 50 involves synthesising or generating the reference voltage during the switching period using the active switching states corresponding to the active vectors in the determined subset. For instance, a switching sequence may be defined that includes cycling between each of the selected/determined switching states once during the switching period. In particular, the switching sequence may involve cycling between each of the active switching states according to a direction of rotation (i.e. anticlockwise rotation) of the reference vector about the pole of the polar coordinate plane. Also, the switching sequence may begin and end with a zero switching state, with the active switching states being in between.

Steps 502 to 505 of the method 50 may then be repeated for successive switching periods. Note that a different number of active vectors may be selected in a subset for one switching period relative to the subset selected for the next switching period. For instance, in a fundamental cycle, a combination of two- and three-vector modulation may be used, or a combination of three- and four-vector modulation may be used. Although the sampling frequency may remain constant, a rotational speed of the electric motor may vary, which can cause the change between the number of active vectors used for the modulation in successive samples. The lower the ratio between the switching and fundamental frequencies, the more likely a higher number of active vectors will be used in the switching sequence across a switching period.

Many modifications may be made to the described examples without departing from the scope of the appended claims.

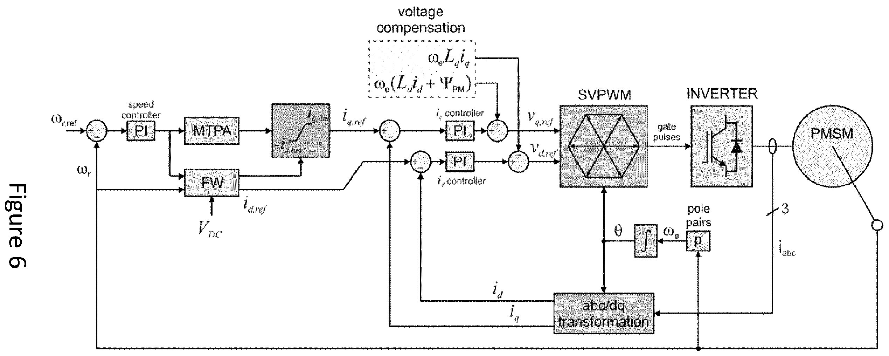

Example results from simulations and experiments utilising the described method are also presented. The described modulation strategy may be validated via simulations considering standard vector control to regulate the currents of a permanent magnet synchronous machine (PMSM). Maximum torque per ampere and feedforward flux weakening algorithms are also implemented. Figure 6 illustrates a schematic diagram of the control scheme. The simulation parameters are presented in Table 5 below.

Table 5

| Symbol | Description | Value |
|--------|-------------|-------|
| $P_m$ | Power | 0.6 kW |
| $\omega_{base}$ | Base speed | 1200 rpm |
| $I_s$ | Rated current | 6 A |

(continued)

| Symbol | Description | Value |
|--------|-------------|-------|
| $P$ | Poles | 8 |
| $R_s$ | Stator resistance | 0.94 $\Omega$ |
| $L_d$ | d-axis inductance | 4.5 mH |
| $L_q$ | q-axis inductance | 4.5 mH |
| $V_{DC}$ | DC supply voltage | 100 V |
| $f_s$ | Switching frequency | 500 kHz |

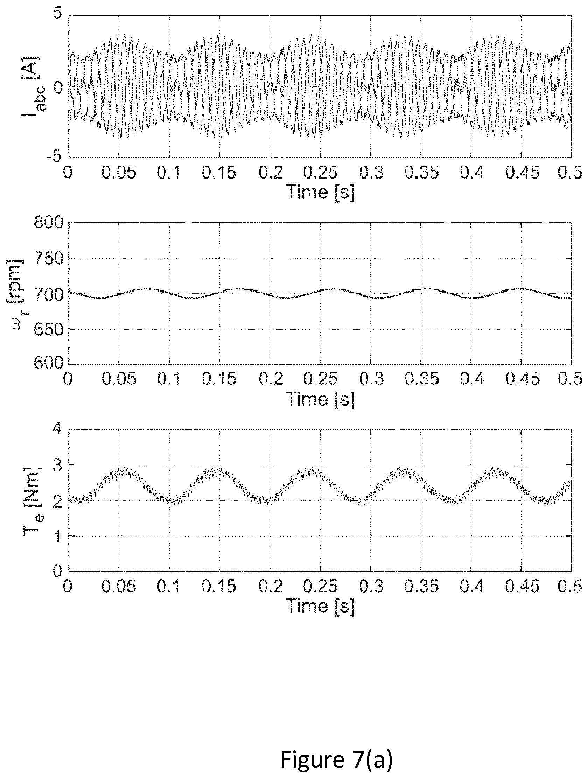

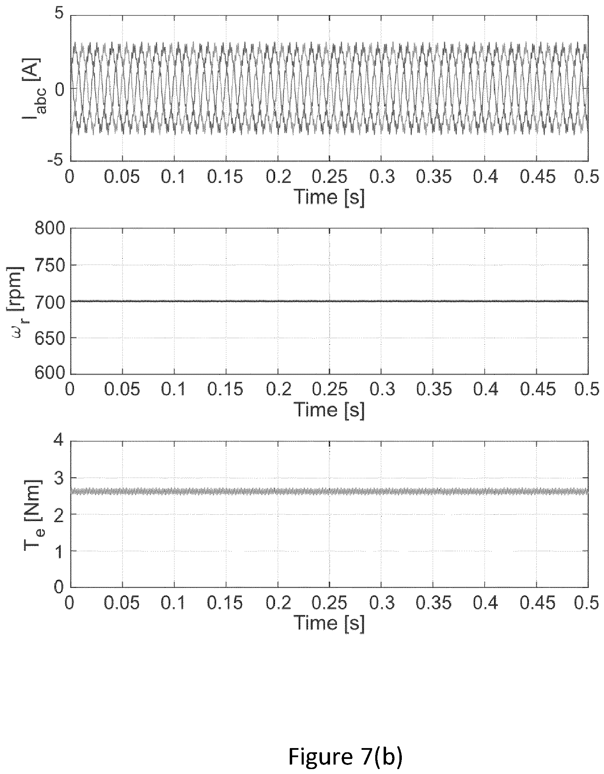

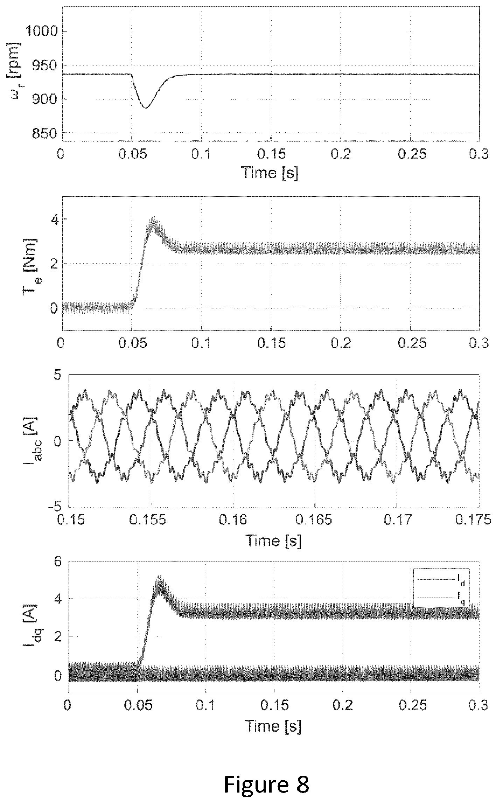

Figure 7(a) shows the results at 700rpm ($m_f$ = 10.7) for conventional SVM; a load torque of 2.6Nm is applied at t=0.01s. In this case, the occurrence of the beat frequency phenomenon is evident, where an unwanted imbalance of the currents and large torque pulsations are produced. Results using the proposed modulation strategy for the same speed and load conditions are shown in Figure 7(b), and the effectiveness of the proposed method in avoiding the beat phenomenon in the machine drive may be observed. In particular, Figure 7(b) shows (from top to bottom) the simulated phase currents, speed, and torque. The speed and torque are controlled correctly, and the currents are balanced. For a rotational speed of 937.5rpm, corresponding to a frequency ratio $m_f$ = 8, the results are shown in Figure 8. Satisfactory control of the machine variables may again be observed.

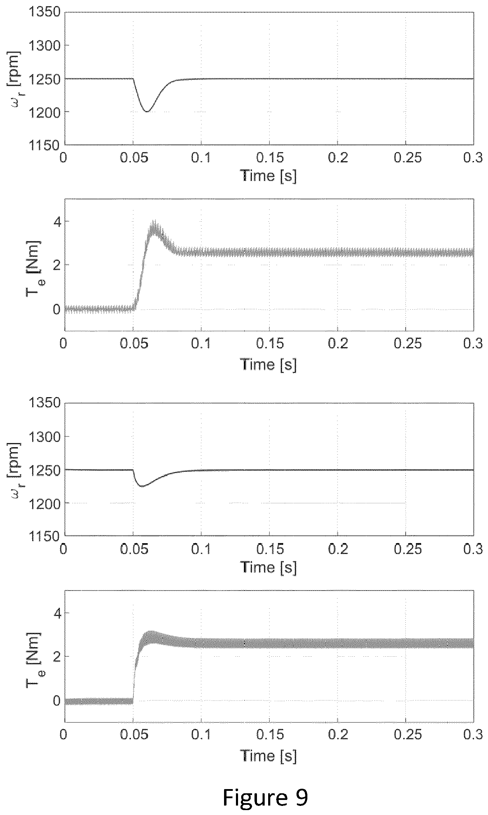

Figures 9 to 11 illustrate the results for $m_f$ = 6. In particular, the results of the present method compared against six-step modulation are shown. In general, six-step modulation is expected to show a good performance operating at a very low switching-to-fundamental frequency ratio. In fact, six-step modulation is not particularly affected by a switching frequency as it operates with a fixed sequence of pulses consisting of only applying the active vector located closest to the reference. Moreover, it does not consider the application of zero vectors. In this way, the fundamental output voltage is the maximum possible that can be obtained with a two-level VSI.

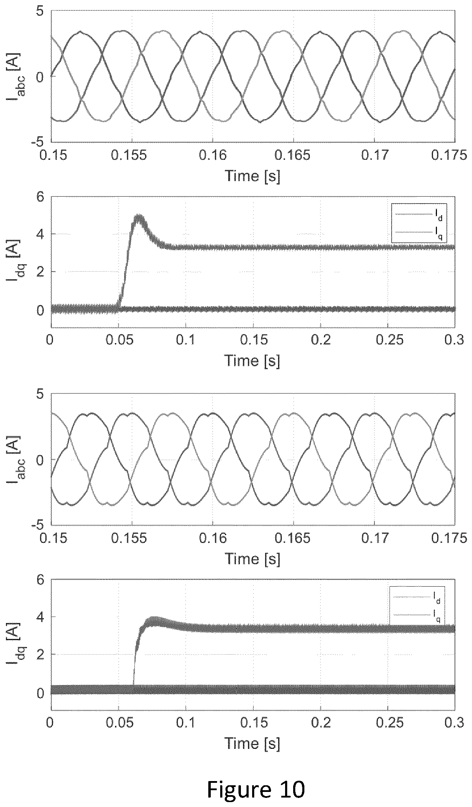

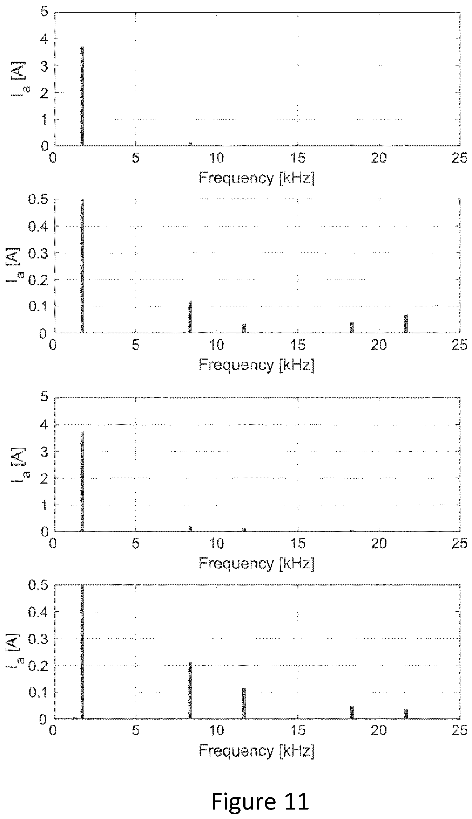

Figure 9 shows the speed and torque obtained at 1250rpm ($m_f$ = 6), where the top two plots are speed and torque of the described method, and the bottom two plots are speed and torque of six-step modulation. It is noted that the dynamic response during the torque transient for the present strategy presents a relatively higher overshoot than in six-step modulation. This is because in six-step modulation the currents are not directly controlled, but only the angle of the voltage is regulated (angle typically generated from a look-up table). On the other hand, in the described method, the vector control strategy for the machine currents is operating and therefore the response obtained is typical for PI controllers. The currents in *abc* and *dq* frames are shown in Figure 10. A slightly lower magnitude can be observed for six-step modulation (bottom two plots). Due to the maximum voltage applied by the six-step modulation, the flux-weakening requirement is lower compared to the proposed SVM strategy, then leading to the d-axis current also being lower. Finally, the spectra for the currents are shown in Figure 11, where a lower harmonic content is observed for the proposed modulation method (top two plots) than for six-step modulation (bottom two plots).

Experiments to verify the effectiveness of the described modulation method may be carried out on a test rig based on a dSPACE platform. The experimental parameters are the same as those listed in Table 5 above. The load torque is provided by a direct current generator coupled to the test machine and supplying a variable resistor. External Hall-effect current sensors are installed on a conditioning board to measure the inverter output phase currents. The resolution of the analog-to-digital converter (ADC) for sampling the currents is 16 bits. An incremental encoder of 1024 pulses per revolution is used to obtain the rotor position. The measured variables are acquired by the dSPACE hardware and software in the host PC, and then analysed and plotted in MATLAB.

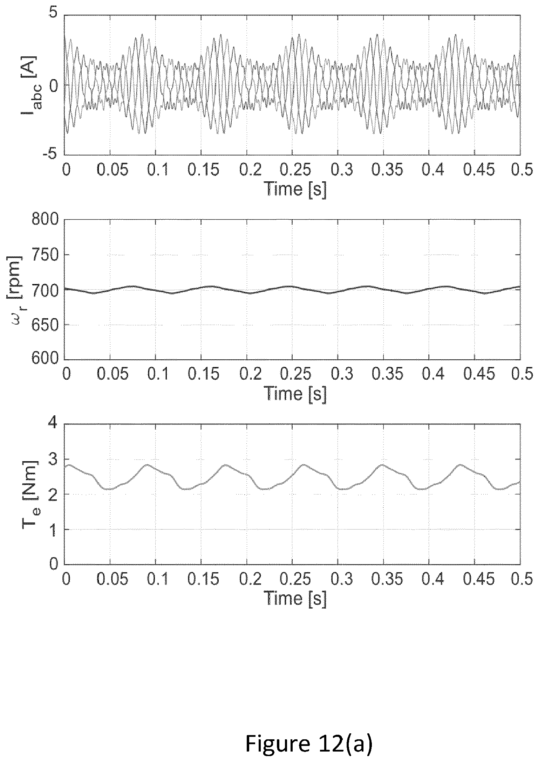

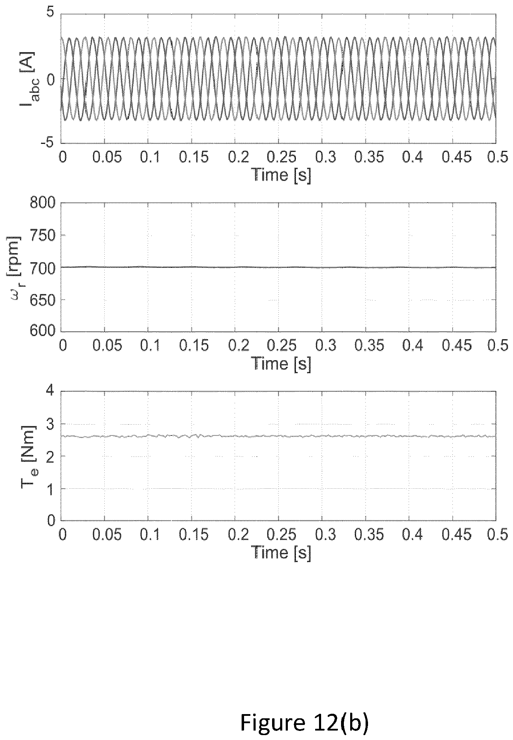

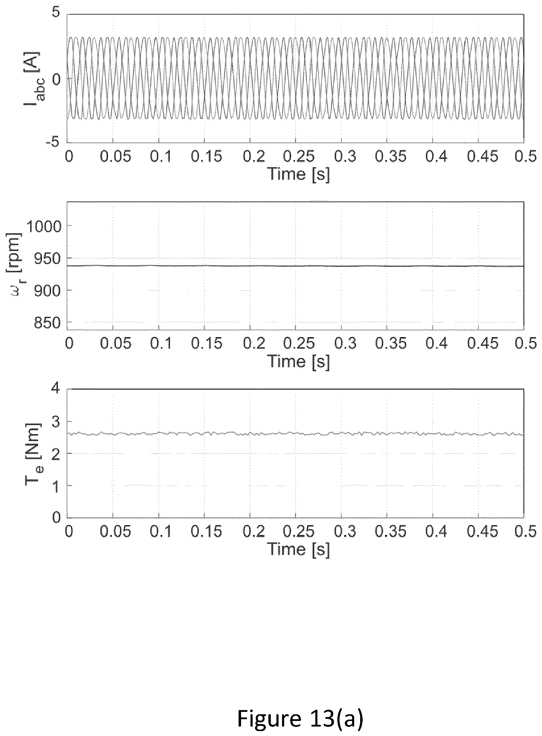

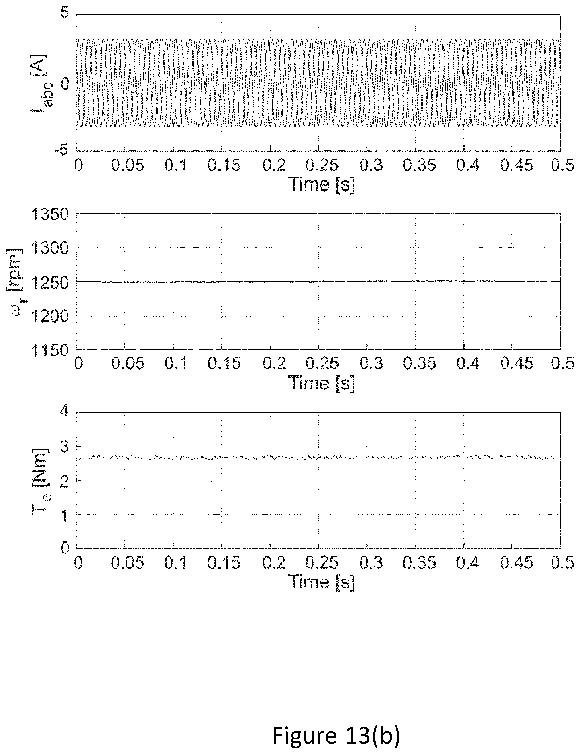

Figure 12 shows results for the machine operating 700 rpm ($f_1$ = 46.67 *Hz*) which corresponds to a frequency ratio $m_f$ = 10.7. For the conventional space vector pulse width modulation (SVPWM) in Figure 12(a), it the occurrence of the above-mentioned beat phenomenon may clearly be observed, indicated by large pulsations of the machine currents (top plot of Figure 12(a)), and consequently, large pulsations in the electromagnetic torque (bottom plot of Figure 12(a)). On the other hand, for the same speed and load conditions, the problem is solved when the described modulation strategy is applied, as can be seen in Figure 12(b), visibly validating the effectiveness of the described method. Further results for frequency ratios $m_f$ = 8 ($\omega_r$ = 937.5rpm) and $m_f$ = 6 ($\omega_r$ = 1250rpm) are shown in Figures 13(a) and 13(b), respectively, which show the machine phase currents (top), speed (middle), and torque (bottom).

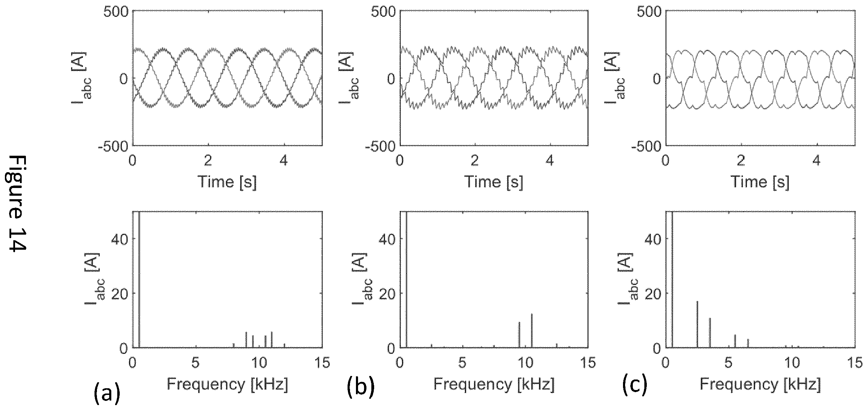

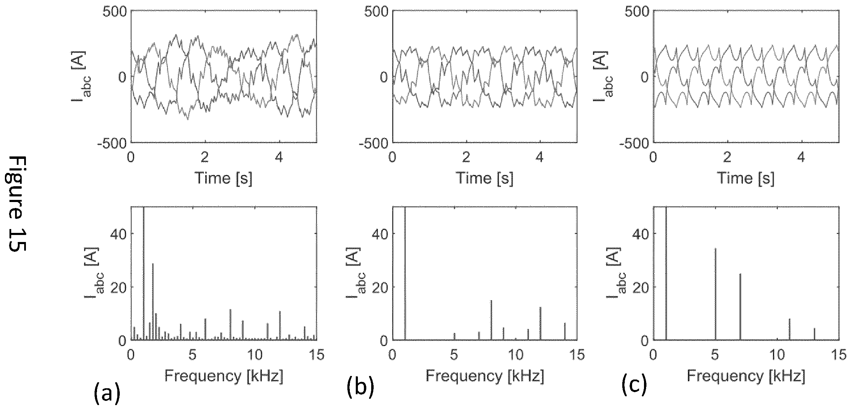

The current waveforms, spectra, and total harmonic distortion (THD) have further been obtained via simulations. In the results shown in Figures 14 and 15, a comparison between conventional SVPWM (Figures 14(a) and 15(a)), the described method (Figures 14(b) and 15(b)), and six-step modulation (Figures 14(c) and 15(c)) is presented where a fixed switching frequency of 1500Hz is considered. Figure 14 presents the currents and their spectra for a speed of 1125rpm equivalent to a frequency ratio $m_f$ = 20. A similar spectra for conventional SVPWM and the described method can be appreciated. On the other hand, in the six-step case, the 5th and 7th harmonics are the most noticeable harmonic components. In Figure 15, the operating speed is 2250rpm representing a frequency ratio $m_f$ = 10. In this case, the current distortion for conventional SVPWM increases considerably as the pulsations associated to the beat phenomenon are taking place. For six-step modulation, the 5th and 7th order current harmonics are again the major reason for the distortion, and finally for the described method ('proposed SVPWM'), it is clear that the currents have the lowest harmonic content.

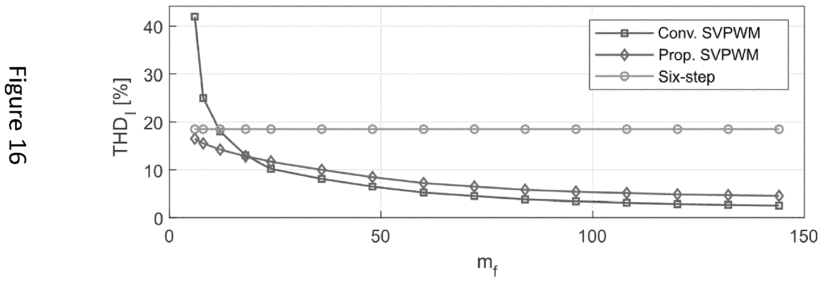

In the study presented in Figure 16, a fixed machine speed of 300 rpm ($f_1$ = 20 $Hz$) is considered and the switching frequency is varied aiming to operate with different switching-to-fundamental frequency ratios. The proposed SVPWM strategy (i.e. the method described in accordance with the present invention) is compared with the conventional SVPWM and six-step modulation. As mentioned above, six-step modulation is not affected by the switching frequency, and therefore exhibits a flat curve. On the other hand, the conventional SVPWM deteriorates when the frequency ratio between the switching frequency and the fundamental frequency is low, leading to an exponential increase in the current distortion. Finally, the proposed modulation method will perform similar to the conventional SVPWM when $m_f$ is high, become better when $m_f$ is low and become much better when $m_f$ is very low ($m_f$ < 15) and the current THD will not increase exponentially.

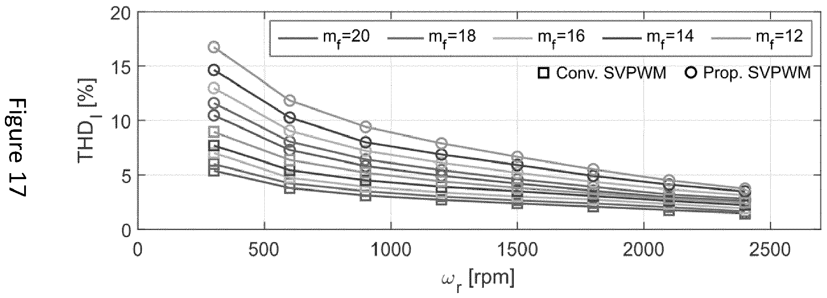

Another comparison between the conventional and the proposed SVPWMs is carried out considering variable speed with constant frequency ratio. The results are shown in Figure 17. In this case, it can be concluded that the current THD is always reduced as the frequency ratio becomes higher.

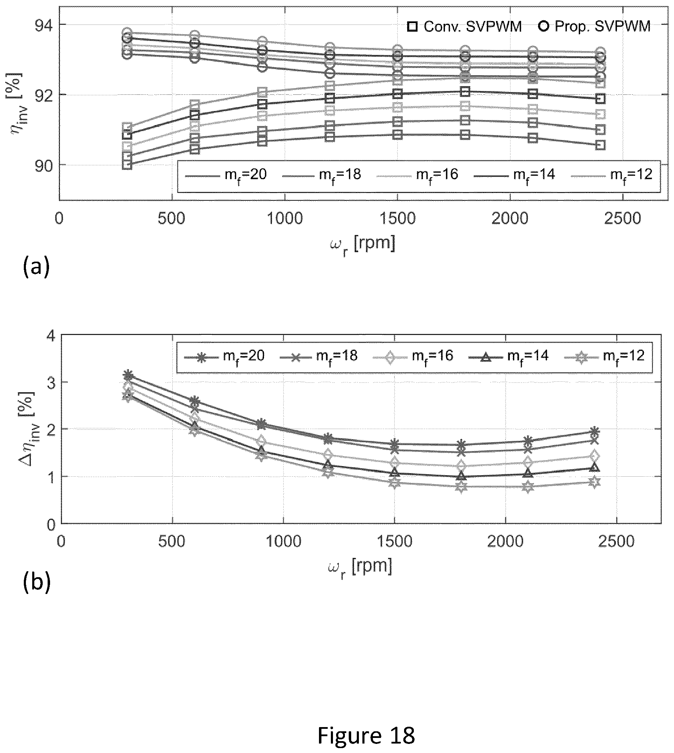

Finally, regarding the inverter losses obtained with the proposed modulation strategy, a brief efficiency analysis is carried out again considering variable speed with constant frequency ratio. The losses of the inverter are calculated by a known method that considers simulated waveform data together with power devices manufacturer's datasheet information to calculate conduction and switching losses. The obtained efficiency curves are plotted in Figure 18(a), whereas Figure 18(b) shows the efficiency difference between proposed and conventional SVPWM. It can be noted that the inverter efficiency obtained with the proposed method is higher than the one obtained with the conventional SVPWM, particularly at low speed where the efficiency difference could be greater than 3%.

**Claims**

1. A method of controlling a voltage source inverter (10) to synthesise a reference voltage to be provided to an electric motor, the voltage source inverter (10) comprising three phase legs (103a, 103b, 103c) each comprising a pair of inverter switches (($S_a$, $\overline{S_a}$), ($S_b$, $\overline{S_b}$), ($S_c$, $\overline{S_c}$)), the inverter switches being operable to provide six active switching states of the inverter,

   the method comprising defining a polar coordinate plane (20), representing the six active switching states as respective active vectors $V_1$-$V_6$ equally spaced about a pole (201) of the polar coordinate plane, and representing a voltage reference vector in the polar coordinate plane, the voltage reference vector defining an angle indicative of a phase of the reference voltage,
   at the start of a switching period of the voltage source inverter, the method comprising:

      sampling the reference voltage to obtain an initial angle of the reference voltage vector $\underline{v}_{o,ref}$ in the polar coordinate plane;
      estimating the reference voltage $\underline{v}_{o,ref}$ at the end of the switching period to obtain an estimated final angle of the reference voltage vector in the polar coordinate plane, the estimation being based on the obtained initial angle, the switching period, and a fundamental frequency of the reference voltage; and,
      determining a subset of the active vectors based on the obtained initial angle and the estimated final angle of the reference voltage vector in the polar coordinate plane, and

   the method comprising synthesising the reference voltage during the switching period using the active switching states corresponding to the active vectors in the determined subset.

2. A method according to Claim 1, the method comprising selecting, based on which of the active vectors are in the determined subset, a switching sequence for operating the voltage source inverter, during the switching period, to switch between the active switching states associated with the active vectors in the determined subset.

3. A method according to Claim 2, wherein the selected switching sequence includes switching each inverter switch on/off a maximum of once during the switching period.

4. A method according to Claim 2 or Claim 3, wherein the switching sequence comprises sequentially switching between the active switching states associated with the active vectors in the determined subset according to a direction of rotation of the reference voltage vector about the pole of the polar coordinate plane.

5. A method according to any of Claims 2 to 4, wherein the inverter switches are operable to provide two zero switching states, one of the zero switching states corresponding to an upper switch in each of the three pairs of inverter switches $((S_a, \overline{S_a}), (S_b, \overline{S_b}), (S_c, \overline{S_c}))$, being switched on, and another one of the zero switching states corresponding to a lower switch in each of the three pairs of inverter switches being switched on, and wherein the selected switching sequence includes at least one of the zero switching states.

6. A method according to Claim 5, wherein the selected switching sequence begins and ends with one of the zero switching states.

7. A method according to any previous claim, wherein six sectors I - VI are defined in the polar coordinate plane, each sector being defined by a respective pair of adjacent active vectors in the polar coordinate plane, and wherein determining the subset comprises determining in which of the sectors the reference voltage vector is expected to be located during the switching period.

8. A method according to Claim 7, wherein the subset is determined to comprise each of the active vectors defining each of the sectors in which the reference voltage vector is expected to be.

9. A method according to Claim 7 or Claim 8, wherein when the reference voltage vector is expected to be in one of the sectors only during the switching period, the subset comprises the two active vectors defining said one sector, and wherein the selected switching sequence is:

$VV_0$ - $VV_1$ - $VV_2$ - $VV_0$ where $VV_0$ is one of the zero switching states, $VV_1$ is the active switching state corresponding to the active vector behind the reference voltage vector in the one sector, and $VV_2$ is the active switching state corresponding to the active vector ahead of the reference voltage vector in the one sector.

10. A method according to Claim 9, wherein the method comprises implementing the selected switching sequence with duty cycles given by:

$$d_0 = 1 - d_1 - d_2$$

$$d_1 = \frac{2}{\sqrt{3}} m \sin\left(\frac{\pi}{3} - \theta_{ref,i}\right)$$

$$d_2 = \frac{2}{\sqrt{3}} m \sin\left(\theta_{ref,i}\right)$$

where $d_0$ is a duty cycle of the zero switching state, $d_1$ is a duty cycle of the active switching state corresponding to the active vector behind the reference voltage vector in the one sector, $d_2$ is a duty cycle of the active switching state corresponding to the active vector ahead of the reference voltage vector in the one sector, $0 \leq m \leq \sqrt{3}/2$ is a modulation index, and $\theta_{ref,i}$ is the angle of a virtual reference vector in the one sector given by:

$$\theta_{ref,i} = \theta_{ref} + \frac{\omega_1 T_s}{2}$$

where $0 \leq \theta_{ref} < \pi/3$ is the initial angle of the voltage reference vector in the one sector, $\omega_1$ is a rotational speed of the electric motor, and $T_s$ is the switching period.

11. A method according to Claim 7 or Claim 8, wherein when the reference voltage vector is expected to be in two of the sectors only during the switching period, the subset comprises the three active vectors defining said two sectors, and wherein the selected switching sequence is:

$VV_0$ - $VV_1$ - $VV_2$ - $VV_3$ - $VV_0$ where $VV_0$ is one of the zero switching states, $VV_1$ is the active switching state corresponding to the active vector behind the reference voltage vector at the initial angle of the reference voltage vector, $VV_2$ is the active switching state corresponding to the active vector ahead of the reference voltage vector at the initial angle of the reference voltage vector, and $VV_3$ is the active switching state corresponding to the active vector ahead of the reference voltage vector at the final angle of the reference voltage vector.

12. A method according to Claim 11, wherein the method comprises implementing the selected switching sequence with duty cycles given by:

$$d_0 = 1 - d_1 - d_2 - d_3$$

$$d_1 = d_{1,i}$$

$$d_2 = d_{2,i} + d_{1,f}$$

$$d_3 = d_{2,f}$$

$$d_{1,i} = \frac{2}{\sqrt{3}} k_i m \sin\left(\frac{\pi}{3} - \theta_{ref,i}\right)$$

$$d_{2,i} = \frac{2}{\sqrt{3}} k_i m \sin\left(\theta_{ref,i}\right)$$

$$d_{1,f} = \frac{2}{\sqrt{3}} k_f m \sin\left(\frac{\pi}{3} - \theta_{ref,f}\right)$$

$$d_{2,f} = \frac{2}{\sqrt{3}} k_f m \sin\left(\theta_{ref,f}\right)$$

$$k_i = \frac{\pi/3 - \theta_{ref}}{\omega_1 T_s}$$

$$k_f = 1 - k_i$$

where $d_0$ is a duty cycle of the zero switching state, $d_1$ is a duty cycle of the active switching state corresponding to the active vector behind the reference voltage vector at the initial angle of the reference voltage vector, $d_2$ is a duty cycle of the active switching state corresponding to the active vector ahead of the reference voltage vector at the initial angle of the reference voltage vector, $d_3$ is a duty cycle of the active switching state corresponding to the active vector ahead of the reference voltage vector at the final angle of the reference voltage vector, $0 \le m \le \sqrt{3}/2$ is a modulation index, $\omega_1$ is a rotational speed of the electric motor, $T_s$ is the switching period, and $\theta_{ref,i}$, $\theta_{ref,f}$ are virtual reference vectors in the initial and final sectors of the reference voltage vector given by:

$$\theta_{ref,i} = \frac{\pi/3 + \theta_{ref}}{2}$$

$$\theta_{ref,f} = \frac{\omega_1 T_s - \left(\pi/3 - \theta_{ref}\right)}{2}$$

where $0 \leq \theta_{ref} < \pi/3$ is the initial angle of the voltage reference vector ($\underline{v}_{o,ref}$) in the sector in which the voltage reference vector is located.

13. A method according to Claim 7 or Claim 8, wherein when the reference voltage vector is expected to be in three of the sectors only during the switching period, the subset comprises the four active vectors $V_1$-$V_6$ defining said three sectors, and wherein the selected switching sequence is:

$VV_0$ - $VV_1$ - $VV_2$ - $VV_3$ - $VV_4$ - $VV_0$ where $VV_0$ is one of the zero switching states, $VV_1$ is the active switching state corresponding to the active vector behind the reference voltage vector at the initial angle of the reference voltage vector, $VV_2$ is the active switching state corresponding to the active vector ahead of the reference voltage vector at the initial angle of the reference voltage vector, $VV_3$ is the active switching state corresponding to the active vector behind the reference voltage vector at the final angle of the reference voltage vector, and $VV_4$ is the active switching state corresponding to the active vector ahead of the reference voltage vector at the final angle of the reference voltage vector.

14. A method according to Claim 13, wherein the method comprises implementing the selected switching sequence with duty cycles given by:

$$d_0 = 1 - d_1 - d_2 - d_3 - d_4$$

$$d_1 = d_{1,i}$$

$$d_2 = d_{2,i} + d_{1,m}$$

$$d_3 = d_{2,m} + d_{1,f}$$

$$d_4 = d_{2,f}$$

$$d_{1,i} = \frac{2}{\sqrt{3}} k_i m \sin\left(\pi/3 - \theta_{ref,i}\right)$$

$$d_{2,i} = \frac{2}{\sqrt{3}} k_i m \sin\left(\theta_{ref,i}\right)$$

$$d_{1,m} = d_{2,m} = \frac{1}{\sqrt{3}} k_m m$$

$$d_{1,f} = \frac{2}{\sqrt{3}} k_f m \sin\left(\pi/3 - \theta_{ref,f}\right)$$

$$d_{2,f} = \frac{2}{\sqrt{3}} k_f m \sin\left(\theta_{ref,f}\right)$$

$$k_i = \frac{\pi/3 - \theta_{ref}}{\omega_1 T_s}$$

$$k_m = \frac{\pi/3}{\omega_1 T_s}$$

$$k_f = 1 - k_i - k_m$$

where $d_0$ is a duty cycle of the zero switching state, $d_1$ is a duty cycle of the active switching state corresponding to the active vector behind the reference voltage vector at the initial angle of the reference voltage vector, $d_2$ is a duty cycle of the active switching state corresponding to the active vector ahead of the reference voltage vector at the initial angle of the reference voltage vector, $d_3$ is a duty cycle of the active switching state corresponding to the active vector behind the reference voltage vector at the final angle of the reference voltage vector, $d_4$ is a duty cycle of the active switching state corresponding to the active vector ahead of the reference voltage vector at the final angle of the reference voltage vector, $0 \leq m \leq \sqrt{3}/2$ is a modulation index, $\omega_1$ is a rotational speed of the electric motor, $T_s$ is the switching period, and $\theta_{ref,i}$, $\theta_{ref,m}$, $\theta_{ref,f}$ are virtual reference vectors in the initial, middle and final sectors of the reference voltage vector given by:

$$\theta_{ref,i} = \frac{\pi/3 + \theta_{ref}}{2}$$

$$\theta_{ref,m} = \frac{\pi}{6}$$

$$\theta_{ref,f} = \frac{\omega_1 T_s - \pi/3 - (\pi/3 - \theta_{ref})}{2}$$

where $0 \leq \theta_{ref} < \pi/3$ is the initial angle of the voltage reference vector in the sector in which the voltage reference vector is located.

15. A method according to any previous claim, the method comprising repeating the steps of sampling the reference voltage, estimating the reference voltage, determining the subset, and synthesising the reference voltage, for successive switching periods.

16. A method according to any previous claim, wherein one rotation of the reference voltage vector about the pole of the polar coordinate plane corresponds to the fundamental frequency of the reference voltage, and wherein the method is performed if a ratio between a switching frequency of the voltage source inverter and the fundamental frequency is below a prescribed threshold value.

17. A controller for controlling a voltage source inverter to perform a method according to any previous claim.

18. A non-transitory, computer-readable storage medium storing instructions thereon that when accessed by one or more processors cause the one or more processors to perform a method according to any of Claims 1 to 16.

Figure 1

Figure 2

Figure 3

(a)

(b)

Figure 4

50

501

Define polar coordinate plane, active vectors and voltage reference vector

502

Sample reference voltage at start of switching period

503

Estimate reference voltage at end of switching period

504

Determine subset of active vectors

505

Figure 5

Synthesise reference voltage

Figure 6

Figure 7(a)

Figure 7(b)

Figure 8

Figure 9

Figure 10

Figure 11

Figure 12(a)

Figure 12(b)

Figure 13(a)

Figure 13(b)

Figure 14

Figure 15

Figure 16

Figure 17

(a)

(b)

Figure 18

Europäisches
Patentamt

European
Patent Office

Office européen
des brevets

## EUROPEAN SEARCH REPORT

Application Number

EP 22 21 1892

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAI Y S: "SENSORLESS SPEED VECTOR-CONTROLLED INDUCTION MOTOR DRIVES USING NEWRANDOM TECHNIQUE FOR INVERTER CONTROL", IEEE TRANSACTIONS ON ENERGY CONVERSION, IEEE SERVICE CENTER, PISCATAWAY, NJ, US, vol. 14, no. 4, 1 December 1999 (1999-12-01), pages 1147-1155, XP000931934, ISSN: 0885-8969, DOI: 10.1109/60.815040 | 1-10,15, 17,18 | INV. H02M1/12 H02M7/5387 H02P27/06 |
| A | * figures 1-7, 9 * * Chapter II * | 11-14,16 | |
| X | EP 0 371 442 A1 (HITACHI LTD [JP]) 6 June 1990 (1990-06-06) | 1-10,15, 17,18 | |
| A | * Equations (2)-(9); figures 1-11 * | 11-14,16 | |
| A | HUANG ZHEN ET AL: "An effective hybrid space vector PWM technique to improved inverter performance", 2017 IEEE SOUTHERN POWER ELECTRONICS CONFERENCE (SPEC), IEEE, 4 December 2017 (2017-12-04), pages 1-6, XP033344643, DOI: 10.1109/SPEC.2017.8333615 [retrieved on 2018-04-06] * Chapters II and IV.B; figures 1, 2, 5 * | 1-18 | TECHNICAL FIELDS SEARCHED (IPC) H02M H02P |

-/--

The present search report has been drawn up for all claims

| Place of search | Date of completion of the search | Examiner |
|---|---|---|
| The Hague | 3 May 2023 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches Patentamt
European Patent Office
Office européen des brevets

Application Number

EP 22 21 1892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HARI V S S PAVAN KUMAR ET AL: "Space-Vector-Based Hybrid PWM Technique to Reduce Peak-to-Peak Torque Ripple in Induction Motor Drives", IEEE TRANSACTIONS ON INDUSTRY APPLICATIONS, IEEE SERVICE CENTER, PISCATAWAY, NJ, US, vol. 52, no. 2, 1 March 2016 (2016-03-01), pages 1489-1499, XP011603516, ISSN: 0093-9994, DOI: 10.1109/TIA.2015.2487442 [retrieved on 2016-03-17] * Chapters II and III; figures 1-3, 5, 7 * | 1-18 | |
| A | DONG QINGHUA ET AL: "Hybrid PWM and Smooth Switching Technology for Traction PMSM Drives in Low Switching Frequency", 2020 IEEE 9TH INTERNATIONAL POWER ELECTRONICS AND MOTION CONTROL CONFERENCE (IPEMC2020-ECCE ASIA), IEEE, 29 November 2020 (2020-11-29), pages 2307-2312, XP033883120, DOI: 10.1109/IPEMC-ECCEASIA48364.2020.9368160 [retrieved on 2021-03-02] * Chapter II.A; figures 1, 2 * | 1-18 | |

TECHNICAL FIELDS SEARCHED (IPC)

The present search report has been drawn up for all claims

| Place of search | Date of completion of the search | Examiner |
|---|---|---|
| The Hague | 3 May 2023 | Madouroglou, E |

EPO FORM 1503 03.82 (P04C01)

**EP 4 195 478 A1**

## ANNEX TO THE EUROPEAN SEARCH REPORT
## ON EUROPEAN PATENT APPLICATION NO.

EP 22 21 1892

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| EP 0371442 | A1 | 06-06-1990 | DE | 68920968 T2 | 24-05-1995 |
| | | | EP | 0371442 A1 | 06-06-1990 |
| | | | JP | 2753288 B2 | 18-05-1998 |
| | | | JP | H02151291 A | 11-06-1990 |
| | | | KR | 900008774 A | 04-06-1990 |
| | | | US | 5053690 A | 01-10-1991 |

---------------------------------------------------------------------

EPO FORM P0459

For more details about this annex : see Official Journal of the European Patent Office, No. 12/82

44